(19) **Europäisches Patentamt / European Patent Office / Office européen des brevets**

(11) **EP 4 668 703 A2**

(12) # EUROPEAN PATENT APPLICATION

(43) Date of publication:
**24.12.2025 Bulletin 2025/52**

(21) Application number: **25181356.4**

(22) Date of filing: **06.06.2025**

(51) International Patent Classification (IPC):
$H04L\ 47/00\ ^{(2022.01)}$ $G06N\ 3/043\ ^{(2023.01)}$
$G06N\ 3/045\ ^{(2023.01)}$ $G06N\ 3/0455\ ^{(2023.01)}$
$H04L\ 41/16\ ^{(2022.01)}$ $H04L\ 43/026\ ^{(2022.01)}$
$H04L\ 47/2441\ ^{(2022.01)}$ $H04L\ 47/2483\ ^{(2022.01)}$

(52) Cooperative Patent Classification (CPC):
**H04L 47/2441; G06N 3/043; G06N 3/045;
G06N 3/0455; H04L 41/16; H04L 43/026;
H04L 47/00; H04L 47/2483**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **18.06.2024 US 202418747105**

(71) Applicant: **Avago Technologies International Sales
Pte. Limited
Singapore 768923 (SG)**

(72) Inventors:
• **Li, Gordon Yong**
  **Irvine, CA, 92618 (US)**
• **Chen, Xuemin**
  **Irvine, CA, 92618 (US)**

(74) Representative: **Grünecker Patent- und
Rechtsanwälte
PartG mbB
Leopoldstraße 4
80802 München (DE)**

(54) ## SYSTEMS FOR AND METHODS OF CLASSIFICATION RELATED TO COMMUNICATION NETWORKS

(57) A system for controlling network traffic or responding to communication channel impairment. The system includes a number of circuits configured to perform classification using a number of artificial intelligence models trained to provide an inference related to one class and an artificial intelligence model trained to provide an inference related to several classes. Models are connected within an architecture providing for selective execution of one or more of the individual models. Classification results are used to perform actions to affect flow of information in a communications system.

FIG. 1

EP 4 668 703 A2

**Description**

BACKGROUND

The present disclosure relates to classification within communication networks. The present disclosure relates more specifically to classification using an artificial intelligence (AI) model.

In certain applications, neural network processing engines for machine learning (ML) can use multiple different models that target one or more classes to be detected. These models can be trained with different datasets, and can have different neural network architectures. The models provide complementary inference results for a given classification application which can be difficult to synthesize.

BRIEF DESCRIPTION OF THE DRAWINGS

FIG. 1 is an illustration of a communication system, according to some embodiments.

FIG. 2 is a block diagram of a classification system, according to some embodiments.

FIG. 3 is a block diagram of an embodiment of the system of FIG. 2 for classifying data packet flows within a communication system, according to some embodiments.

FIG. 4 is a block diagram of an embodiment of the system of FIG. 2 for classifying channel impairments within a communication system, according to some embodiments.

FIG. 5 is a block diagram of an embodiment of the system of FIG. 2 that combines single-class and multi-class artificial intelligence models using fuzzy logic operations, according to some embodiments.

FIG. 6 is a flow diagram illustrating the training and inference process of artificial intelligence models combined by fuzzy logic operators, according to some embodiments.

FIG. 7 is flow diagram of a method for classifying data packet flows within a communication system, according to some embodiments.

FIG. 8 is a flow diagram of a method for classifying channel impairments within a communication system, according to some embodiments.

FIG. 9 is a flow diagram of a method for affecting signal propagation within a communication system using classification with artificial intelligence models and fuzzy set operations, according to some embodiments.

DETAILED DESCRIPTION

Some embodiments relate to a classification system and method that uses a number of single-class artificial intelligence models and a number of multi-class artificial intelligence models. The models are evaluated and their outputs combined depending on the application in some embodiments. The combination may be performed using theory from fuzzy logic. The classification operations include, but are not limited to determining a class of communication network traffic for a data packet flow or detecting and determining the class of a channel impairment. In some embodiments, systems and methods are used in machine learning (ML) classification applications where multiple different models target one or more classes to be detected. These models can be trained with different datasets, and can have different neural network architectures. The systems and methods advantageously synthesize complementary inference results with efficiency in some embodiments.

An embodiment of the present disclosure relates to a system for controlling traffic within a communications network. The system includes a number of circuits configured to perform operations. The operations include providing a first input based on a flow of data packets, the input including a first set of features of the flow of data packets. The operations include providing a first set of results by evaluating a first model using the input, an element of the first set of results representing a possibility that the flow of data packets used to create the input is a member of a class of network traffic of a number of classes of network traffic. The operations include using the first set of results to determine a subset of a second set of models to evaluate. The operations include providing a second set of results by evaluating the subset using a second input, the second input includes a second set of features of the flow of data packets. The operations include using the second set of results to determine a first class of the flow of the classes of network traffic. The operations include controlling the traffic based on the first class.

A data packet refers to a digital transmission unit in some embodiments. A data packet should be interpreted as a general unit of data and not specifically to refer to a unit of data within a standard or protocol that explicitly uses the word "packet". For example, a packet could refer to a data frame, segment, datagram, or any other word or phrase used to indicate a unit of data. A flow of data packets refers to a series of packets related to the same purpose in some embodiments. For example, a flow of data packets may refer to a series of packets sent from a server to a client related to an online gaming session. Features of the flow of data packets refer to values describing some information about the flow in some embodiments. For example, features may refer to the source IP address or the average time between packet arrival. A model refers to any artificial intelligence model in some embodiments. For example, a model may refer to a deep-learning model such as a convolutional neural network or an autoencoder. Results from a model refer to a vector or array of values in some embodiments. For example, results may refer to values between zero and one related to how likely a flow of data packets belongs to a specific class. A class of network traffic refers to different purposes for communication over a network in some embodiments. For example, a class of network traffic may refer to online gaming, video streaming, voice streaming, or data transfer. A subset of a set of models refers to any number of models from the original set including zero or all of the models in some embodiments. Controlling traffic refers to affecting how information or data packets propagate through a communications network in some embodiments. For example, controlling traffic may refer to prioritizing a particular class of network traffic. Evaluating a model refers to performing inference in some embodiments. For example, performing inference may refer to calculating the output of a model for a given input.

In some embodiments, the subset of the second set of models to evaluate is determined by comparing the first set of results to a threshold.

In some embodiments, the threshold is dynamically updated based on the first set of results.

A threshold refers to a value representing a point above which another set of operations may be triggered in some embodiments. Dynamically updating a threshold refers to calculating a threshold based on a set of values in some embodiments. For example, dynamically updating a threshold may refer to calculating a threshold, based on the certainty of a first analysis, above which a second analysis will be run.

In some embodiments, creating the first input or the second input based on the flow of data packets includes detecting an initiation of the flow of data packets, collecting an initial set of packets, and creating the first set of features or the second set of features based on packet control information and statistics of the data packets.

An initiation of a flow of data packets refers to the beginning of the flow in some embodiments. The initial set of packets refers to a number of the first packets in the flow in some embodiments. For example, the initial set of packets may refer to the first packet, the first ten packets, the first hundred packets, etc. Packet control information refers to packet routing information in some embodiments. For example, packet control information may refer to the source or the destination IP address. Statistics of payloads refer to any statistic of the data packet in some embodiments. For example, statistics of the payload may refer to the average size of the packet payload or the average arrival time between packets.

In some embodiments, generating the first set of results is performed on an edge device of the communications network.

In some embodiments, generating the second set of results is performed on a node in a cluster of computers.

An edge device refers to hardware used to process the flow of data in some embodiments. For example, an edge device may refer to a router, switch, gateway, etc. A node in a cluster of computers refers to a computer connected to other computers of the cluster (or group) through a network in some embodiments. For example, a node may refer.hardware used for cloud computing or a computer in a group of local servers.

In some embodiments, the first model includes a number of dichotomizers, each dichotomizer trained to determine if the flow is part a class from a number of classes or not part of the class.

A dichotomizer refers to a model used for classification between two classes in some embodiments. For example, a dichotomizer may refer to a model to determine if a signal is anomalous or not anomalous. For a model to be trained refers to adjusting the parameters of a model based on previous examples so that the model can perform a particular task in some embodiments.

In some embodiments, the second set of models includes an autoencoder for each class of the classes.

In some embodiments using the second set of results to determine the first class includes selecting the autoencoder that best fits the input or the flow of data packets according to a fit metric.

In some embodiments, the fit metric includes at least one of a median absolute deviation, a mean absolute error, or a mean squared error.

An autoencoder refers to a model that is trained to recreate an input in some embodiments. A fit metric refers to how well a model recreates inputs in some embodiments. For example, a fit metric may include the median absolute deviation or mean squared error. Mean absolute error refers to a fit metric that uses the mean of the absolute value of the difference between the value estimated by a model and the original value in some embodiments. Median absolute deviation refers to a fit metric that uses the median of the absolute value of the difference between the value estimated by a model and the original value in some embodiments. Mean squared error refers to a fit metric that uses the mean of the square of the difference between the value estimated by a model and the original value in some embodiments.

In some embodiments, the first set of results and the second set of results are combined using fuzzy set operations.

In some embodiments, the first model and the second set of models are trained together using the fuzzy set operations to calculate a classification metric during training.

Combining the results of models refers to determining a final classification based on the results or inferences of several models in some embodiments. A fuzzy set may refer to a mathematical framework in which elements of a set have degrees of membership in some embodiments. An element of a fuzzy set may have a degree of membership that is between zero and one. For example, a 34 year-old person may have a degree of membership to the set "middle-aged" of 0.76 and a degree of membership to the set "young" of 0.18. A fuzzy set operation refers to a calculation performed to determine the membership in any derived fuzzy set in some embodiments. For example, a fuzzy set operation may include a complement, s-norm, t-norm, a max function, or a min function. A classification metric refers to a how well a model determines the actual class of an input in some embodiments. For example, a classification metric may refer to cross-entropy loss.

An embodiment of the present disclosure relates to a system for detecting and responding to a channel impairment within a communications network. The system includes one or more circuits configured to perform operations. The operations include receiving or calculating features from a number of types of features related to a signal. The operations include calculating a first set of results using a first set of models, the first set of models including a model trained to detect one or more channel impairments using a first set of features of a type of feature of the number of types of features. The operations include determining if the signal has been affected by the one or more channel impairments using the first set of results. The operations include calculating a second set of results using a second model, the second set of results includes a value for each of the one or more channel impairments. The operations include determining a class of channel impairment affecting the signal based on the second set of results. The operations include performing an automated action to mitigate an effect of the channel impairment based on the class determined.

In some embodiments, the number of types of features includes at least one of features related to a constellation diagram of the signal, features related to a received modulation error ratio of the signal, or features related to a frequency spectrum of the signal.

A channel impairment refers to an adverse effect in a communication channel in some embodiments. For example, a channel impairment may refer to an attenuation of a signal or interference from adjacent signals. A constellation diagram refers to the phase and magnitude of a received signal and its mapping to a binary data in some embodiments. Received modulation error ratio refers to the ratio of the power in an idea signal to the power of a signal representing the difference, in the I-Q plane, between the ideal signal and the actual received signal in some embodiments. A signal may represent audio, video, an image, digital representations of data, or any type of information that may be communicated over a communications network.

In some embodiments, the second model includes a number of models, each of the number of models used in calculating one or more of the values for each of a number of classes.

In some embodiments, determining if the signal has been affected by the channel impairment is performed on an edge device of the communications network, and using the second model to determine the class of channel impairment affecting the signal is performed on a node in a cluster of computers.

In some embodiments, the first set of results and the second set of results are combined using fuzzy set operations.

In some embodiments, the first set of models and the second model are trained together using the fuzzy set operations to calculate a fit metric during training.

An embodiment of the present disclosure relates to a method for affecting propagation of a signal within a communications network. The method includes receiving or calculating features from the signal to generate an input for a first model and a second model. The method includes providing a first set of results by evaluating the first model using the input. The method includes providing a second set of results by evaluating the second model using the input. The method includes determining a class of the input by combining the first set of results and the second set of results using fuzzy set operations. The method includes performing an automated action to affect the propagation of the signal based on the class of the input.

In some embodiments, performing the automated action to affect the propagation of the signal includes at least one of prioritizing processing the signal or related signals based on the class of the input, or mitigating a channel impairment based on the class of the input.

An automated action refers to any action performed without human interaction in some embodiments. For example, an automated action may refer to automatically applying an equalizer to a received signal. Affecting propagation of a signal refers to any manner of affecting how a signal or the data contained in the signal is received. For example, affecting propagation of a signal may refer to prioritizing the transmission of a signal or applying a filter to a signal.

This summary is illustrative only and is not intended to be in any way limiting. Other aspects, inventive features, and advantages of the devices or processes described herein will become apparent in the detailed description set forth herein, taken in conjunction with the accompanying figures, wherein like reference numerals refer to like elements.

## Communication System

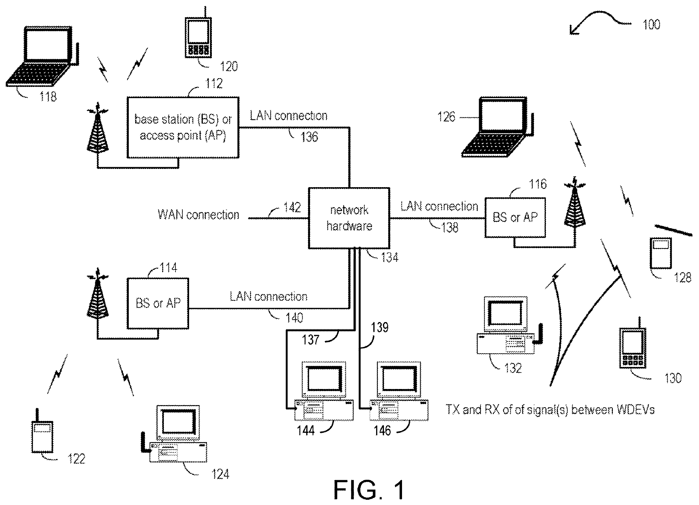

FIG. 1 is a diagram illustrating an embodiment of a communication system 100. The communication system 100 includes base stations and/or access points 112-116, wireless communication devices 118-132 (e.g., wireless stations (STAs)), and a network hardware component 134 and wired communication devices 144-146. The wireless communication devices 118-132 may be laptop computers, or tablets, 118 and 126, personal digital assistants 120 and 130, personal computers 124 and 132 and/or cellular telephones 122 and 128. Other examples of such wireless communication devices 118-132 could also or alternatively include other types of devices that include wireless communication capability. Wired communication devices 144-146 may be desktop computers, network storage devices, cable gateways, optical network gateways, or other similar hardware, or other devices capable of wired communication.

Some examples of possible devices that may be implemented to operate in accordance with any of the various examples, embodiments, options, and/or their equivalents, etc. described herein may include, but are not limited by, appliances within homes, businesses, etc. such as refrigerators, microwaves, heaters, heating systems, air conditioners, air conditioning systems, lighting control systems, and/or any other types of appliances, etc.; vehicles including cars, trucks, semi-trailer trucks, all-terrain vehicles, utility terrain vehicles, snowmobiles and/or any other type of vehicle; meters such as for natural gas service, electrical service, water service, Internet service, cable and/or satellite television service, and/or any other types of metering purposes, etc.; devices wearable on a user or person including watches, monitors such as those that monitor activity level, bodily functions such as heartbeat, breathing, bodily activity, bodily motion or lack thereof, etc.; medical devices including intravenous (IV) medicine delivery monitoring and/or controlling devices, blood monitoring devices (e.g., glucose monitoring devices) and/or any other types of medical devices, etc.; premises monitoring devices such as movement detection/monitoring devices, door closed/ajar detection/monitoring devices, security/alarm system monitoring devices, and/or any other type of premises monitoring devices; multimedia devices including televisions, computers, audio playback devices, set top boxes, optical network terminal, augmented realty devices, virtual reality devices, simulators, video playback devices, and/or any other type of multimedia devices, etc.; and/or generally any other type(s) of device(s) that include(s) wireless, optic, or wired communication capability, functionality, operations, circuitry, etc.. In general, any device that is implemented to support wireless communications may be implemented to operate in accordance with any of the various examples, embodiments, options, and/or their equivalents, etc. described herein.

The base stations (BSs) or access points (APs) 112-116 are operably coupled to the network hardware 134 via local area network connections 136, 138, and 140. Wired communication devices 144-146 may also be coupled to the network hardware via local area network connections 137 and 139. The network hardware 134, which may be a router, switch, bridge, modem, system controller, etc., provides a wide area network connection 142 for the communication system 100. For example, network hardware 134 may communicate using connection 142 to other network hardware including network hardware owned and operated by an internet service provider (ISP). Each of the base stations or access points 112-116 has an associated antenna or antenna array to communicate with the wireless communication devices in its area. Typically, the wireless communication devices register with a particular base station or access point 112-116 to receive services from the communication system 100. For direct connections (i.e., point-to-point communications), wireless communication devices communicate directly via an allocated channel.

Any of the various wireless communication devices (WDEVs) 118-132 and BSs or APs 112-116 may include processing circuitry and/or a communication interface to support communications with any other of the wireless communication devices 118-132 and BSs or APs 112-116. In an example of operation, processing circuitry and/or a communication interface implemented within one of the devices (e.g., any one of the WDEVs 118-132 and BSs or APs 112-116) is/are configured to process at least one signal received from and/or to generate at least one signal to be transmitted to another one of the devices (e.g., any other one of the WDEVs 118-132 and BSs or APs 112-116).

Note that general reference to a communication device, such as a wireless communication device (e.g., WDEVs) 118-132 and BSs or APs 112-116 in FIG. 1, or any other communication devices and/or wireless communication devices may alternatively be made generally herein using the term 'device'

The processing circuitry and/or the communication interface of any one of the various devices, WDEVs 118-132 and BSs or APs 112-116, may be configured to support communications with any other of the various devices, WDEVs 118-132 and BSs or APs 112-116. Such communications may be uni-directional or bi-directional between devices. Also, such communications may be uni-directional between devices at one time and bi-directional between those devices at another time.

In an example, a device (e.g., any one of the WDEVs 118-132 and BSs or APs 112-116) includes a communication interface and/or processing circuitry (and possibly other possible circuitries, components, elements, etc.) to support communications with other device(s) and to generate and process signals for such communications. The communication interface and/or the processing circuitry operate to perform various operations and functions to effectuate such communications (e.g., the communication interface and the processing circuitry may be configured to perform certain operation(s) in conjunction with one another, cooperatively, dependently with one another, etc. and other operation(s) separately, independently from one another, etc.). In some examples, such processing circuitry includes all capability, functionality, operations, and/or circuitry, etc. to perform such operations as described herein. In some other examples, such a communication interface includes all capability, functionality, operations, and/or circuitry, etc. to perform such operations as described herein. In even other examples, such processing circuitry and a communication interface include all capability, functionality, operations, and/or circuitry, etc. to perform such operations as described herein, at least in part, cooperatively with one another.

In an example of implementation and operation, a wireless communication device (e.g., any one of the WDEVs 118-132 and BSs or APs 112-116) includes processing circuitry to support communications with one or more of the other wireless communication devices (e.g., any other of the WDEVs 118-132 and BSs or APs 112-116). For example, such processing circuitry is configured to perform both processing operations as well as communication interface related functionality. Such processing circuitry may be implemented as a single integrated circuit, a collection of integrated circuits, a system on a chip, etc.

In another example of implementation and operation, a wireless communication device (e.g., any one of the WDEVs 118-132 and BSs or APs 112-116) includes processing circuitry and a communication interface configured to support communications with one or more of the other wireless communication devices (e.g., any other of the WDEVs 118-132 and BSs or APs 112-116).

In an example of operation and implementation, BS/AP 116 supports communications with WDEVs 130, 132. In another example, BS/AP 116 supports communications with WDEV 130 (e.g., only with WDEV 130 and not with WDEV 132 or alternatively, only with WDEV 132 and not with WDEV 130).

**Classification Circuitry**

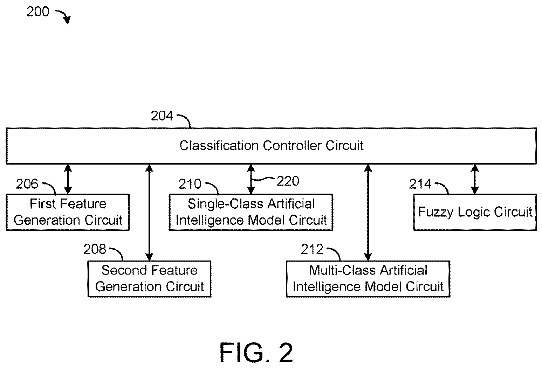

FIGS. 2 - 9 generally relate to classification using artificial intelligence models (AI) models. An artificial intelligence model may be referred to as a model, an AI model, a deep-learning model, a neural network, an AI network, etc. and should be considered to refer generally to artificial intelligence models including, but not limited to: convolutional neural networks, transformer models, pre-trained generative transformer models, autoencoders, long-short term memory networks, recursive neural networks, support vector machines, nearest neighbor classifiers, regression models, or any other suitable artificial intelligence model.

With reference to FIG. 2, a system 200 is configured for classification using single and multi-class artificial intelligence models, according to some embodiments. System 200 is configured to use one multi-class model, which produces inference results for all classes to be detected, and a set of single-class models, which produce inference results for individual classes. System 200 can provide provides three different schemes of synthesizing all inference results jointly to derive a final and optimal classification outcome in some embodiments. Two of the schemes can be based on deterministic synthesis rules. The third scheme can apply synthesis rules with Fuzzy Logic, with machine learning models being utilized as fuzzy set membership function generators. System 200 can be used to classify communications used in system 100. The communications can be associated with wired, optic, or wireless communication mediums.

In some embodiments, system 200 includes classification controller circuit 204, first feature generation circuit 206, second feature generation circuit 208, single-class artificial intelligence model circuit 210, multi-class artificial intelligence model circuit 212, and fuzzy logic circuit 214. A circuit may include, for instance, an integrated circuit, an application specific integrated circuit (ASIC), a field programmable gate array (FPGA), a processor, a memory device, or a number or combination of the same. A circuit may also comprise a combination of hardware, software, and/or firmware. A single circuit may be capable of performing more than one of the features described herein or a single feature may be implemented by a combination of circuits. For example, an ASIC may embody the functionality of first feature generation circuit 206 and single-class artificial intelligence model circuit 210; and a node on a cluster of computers in the cloud may embody the functionality of second feature generation circuit 208, multi-class artificial intelligence model circuit 212, and fuzzy logic circuit 214. Classification controller circuit 204, first feature generation circuit 206, second feature generation circuit 208, single-class artificial intelligence model circuit 210, multi-class artificial intelligence model circuit 212, and fuzzy logic circuit 214 can include software modules and/or routines for performing the operations described herein.

Artificial intelligence or machine learning models may refer to a function, software, data, or circuit that maps an input to an output. The input of an artificial intelligence model may be a multi-dimensional vector, each element of the vector representing a feature of a signal or data. Feature generation may refer to an operation of taking a more general object (e.g., a signal or flow of data packets) and converting that object to the multi-dimensional input. For example, text may be "embedded" by converting it into a vector in a high-dimensional space; features may be generated from a flow of data packets by capturing the port, the transmission control protocol (TCP) flag, the payload, routing information, median packet size, jitter, or any other value or statistic of the flow of data packets or its payload. The output of an artificial intelligence model may be another vector, potentially in a different dimensional space. System 200 advantageously uses artificial intelligence models to classify inputs (e.g., from packet flows or signals) in some embodiments. In a classification problem, the output of the model may be a vector in a space with dimensionality equal to the number of classes from which to choose. Each element of the vector may relate to the possibility that the input is from a member of a class. The classifier may then choose the class for which the element is the greatest. The artificial intelligence models used may include convolutional neural networks, transformer models, pre-trained generative transformer models, autoencoders, long-short term memory networks, recursive neural networks, support vector machines, nearest neighbor classifiers, or any other suitable artificial intelligence model.

In some embodiments, classification controller circuit 204 is configured to control the timing and flow of data through the other circuitry of system 200. For example, classification controller circuit 204 may be configured to execute first feature generation circuit 206; pass the generated features to single-class artificial intelligence model circuit 210; determine if multi-class artificial intelligence model circuit 212 should be evaluated; and, dependent on the determination, evaluate multi-class artificial intelligence model circuit 212; before finally making a determination on the class of the input based on the evaluations of multi-class artificial intelligence model circuit 212 and single-class artificial intelligence model circuit 210. Based on the application, classification controller circuit 204 may be configured to cause the performance of the operation(s) included in any of the circuits and in any order.

In some embodiments, classification controller uses any communication capability (e.g., communication capability 220) to control the flow of data through the various circuits, to cause execution of the circuit operation(s), etc. Communication capability (e.g., communication capability 220) may represent any form of communication. For example, if the two circuits are integrated into a single integrated circuit (IC), the communication may be provided by a conductive material (e.g., doped silicon, metal, etc.); if the two circuits are on the same circuit board, communication may be over copper traces on a communication bus. In some embodiments, the operation(s) embodied by some of the circuits is performed on a node of a cluster of computers (e.g., the "cloud") and the communication may be over a network. Any portion of the network may be wireless.

In some embodiments, system 200 includes first feature generation circuit 206. A feature generation circuit may be configured to generate features or elements of a vector input to an artificial intelligence model. For example, features generated from a flow of data packets may include the port, the transmission control protocol (TCP) flag, the payload, routing information, the packet size distribution, jitter, the interarrival time, packet loss rate, throughput, or any other value or statistic of the flow of data packets, its payload, or its metadata. Features generated from a quadrature amplitude modulated (QAM) signal or orthogonal frequency-division multiplexing (OFDM) may include the received modulation error ratio, values or statistics related to the frequency spectrum of the signal, or values related to a constellation chart (e.g., dispersion, shift, clustering within a segment, rotations, tilt, attenuation, changes in the frequency a constellation point occurs, etc.). In some embodiments, system 200 includes second feature generation circuit 208. Though some embodiments require only a single feature generation circuit, a second may be advantageous. For example, the second feature generation circuit may only be executed if a certain criterion is met (e.g., moderate probability of a channel impairment) thus reducing communications traffic and/or computations in a limited resource environment.

In some embodiments, system 200 includes single-class artificial intelligence model circuit 210. Single-class artificial intelligence model circuit 210 may be configured to perform evaluations of a number of single-class artificial intelligence models. A single-class artificial intelligence model may refer to a model that produces a single output related to the possibility that the input is related to a particular class. In some embodiments, a dichotomizer is a type of single-class artificial intelligence model that determines if an input is part of a first class or not part of the first class (e.g., the dichotomizer may calculate the probability that the input is from the first class or it may just output a binary result). In some embodiments, an autoencoder is a type of single-class artificial intelligence model where the training objective is the median absolute error of the autoencoder. Advantageously, single-class artificial intelligence models may be trained without examples of the other classes, potentially significantly reducing the number of training samples required to train a model that generalizes well to new samples after deployment in some embodiments.

In some embodiments, system 200 includes multi-class artificial intelligence model circuit 212. A multi-class artificial intelligence model is defined as a model that produces a number of outputs (e.g., a vector) wherein each of the number of outputs represents a possibility that the input to the model was from the class associated with that output. In some embodiments, multi-class artificial intelligence model circuit 212 may be configured to perform the evaluations of a number of multi-class artificial intelligence models. For example, a multi-class artificial intelligence model may output a vector for which each elements represents a possibility that a signal has been affected by a particular channel impairment.

Advantageously, using two model circuits reduces the computations or communication traffic in a limited environment by only evaluating the second model if a criterion has been met by the output of the first model in some embodiments. Additionally, using two model circuits allows one to be updated (based on new training) while the other is not updated in some embodiments. This provides an advantage when one model circuit is deployed in edge equipment (e.g.,

network hardware) that is difficult or more costly to update and the other is deployed in the cloud and there is only a small number of centralized deployments to update in some embodiments.

In some embodiments, system 200 includes fuzzy logic circuit 214. Fuzzy logic circuit may be configured to interpret the outputs of any of the artificial intelligence model circuits (e.g., single-class artificial intelligence model circuit 210 or multi-class artificial intelligence model circuit 212) as memberships (and the models themselves as one or more membership functions) to fuzzy sets and perform fuzzy set operations to combine the outputs of the models. A fuzzy set operation is a calculation of a membership to a derived fuzzy set as previously defined. For example, fuzzy logic circuit 214 may be configured to subtract the output of an AI model from the number one to perform a complement operation; fuzzy logic circuit 214 may be configured to calculate the s-norm (e.g., by performing a maximum operation) on outputs of a number of AI models to represent the membership value of a union of the fuzzy sets; and fuzzy logic circuit 214 may be configured to calculate the t-norm (e.g., by performing a minimum operation) on outputs of a number of AI models to represent the membership value of a intersection of fuzzy sets.

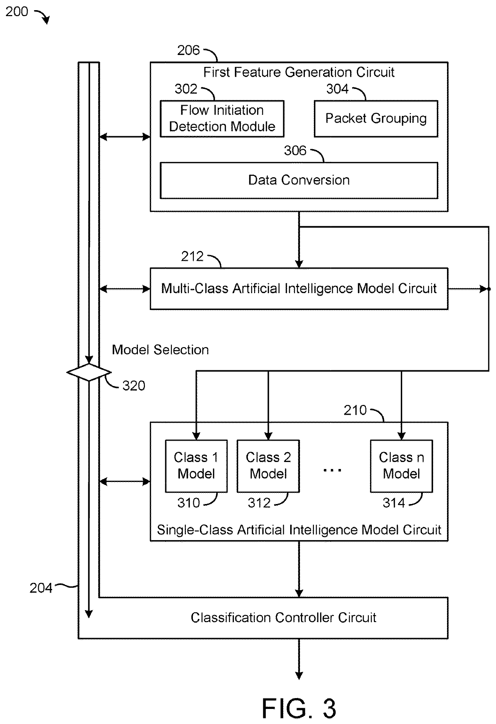

FIG. 3 shows a configuration of system 200 that can be used to determine the class of a packet flows from a number of classes of network traffic according to some embodiments. A packet flow (data packet flow or flow of data packets) may be defined as a set of packets sent from an origin to a single destination for a common purpose. For example, packet flows may be represented by the packets associated with a session of an online game, the packets associated with a video stream to one television, the packets associated with a bulk data transfer to a single computer, etc. Network traffic refers generally to packet flows. For example, packet flows may be classified into classes of network traffic. Determining the class may refer to determining the purpose for the flow of data packets. For example, packet flows may be classified as gaming, video stream, or data transfer. System 200 may include first feature generation circuit 206. In some embodiments, first feature generation circuit 206 may be configured to detect the initiation of a packet flow (e.g., using module 302). A new packet flow may be detected, for example, by analyzing a source and destination IP address and determining how much time has passed since the last time a packet with the same source and destination was received. First feature generation circuit 206 may be configured to perform packet grouping (e.g., using packet grouping module 304). Packet grouping may include taking a sampling of packets from a packet flow to determine the features (e.g., statistics) based on that sampling. First feature generation circuit 206 may be configured to convert the sampling of packets into features (e.g., using data conversion module 306). Example features include, but are not limited to: the port, the transmission control protocol (TCP) flag, the payload, routing information, the packet size distribution, jitter, the interarrival time, packet loss rate, throughput, or any other value or statistic of the flow of data packets, its payload, or its metadata.

In some embodiments, the features generated by first feature generation circuit 206 may be transferred to multi-class artificial intelligence model circuit 212 (e.g., over a communication capability 220). Multi-class artificial intelligence model circuit 212 may be commanded to run by classification controller circuit 204 to produce a first set of results. In some embodiments, the first set of results is a vector for which each element is a value related to the possibility that the packet flow is of one of the possible classes (e.g., gaming, video streaming, data transfer, etc.). For example, the elements may be numbers between zero and one. In some embodiments, the first set of results are aggregated with the features so both can be used in the evaluation of the single-class models (e.g., model 310 - 314) of single-class artificial intelligence model circuit 210.

In some embodiments, a model selection is performed (represented by decision 320 in classification controller circuit) to determine which of the single-class models should be run. Advantageously, running a subset of the single-class models reduces both computational network resources required by system 200 in some embodiments. Decision 320 may decide to run single-class models of the classes for which the output of multi-class artificial intelligence model circuit 212 was above a threshold. Or decision 320 may decide to run single-class models only if the more than one of the elements of the result has a similar value (e.g., in the case where multi-class artificial intelligence model circuit 212 is uncertain of the class). This threshold may be defined during the training process by performing a trade-off analysis between the number of misclassifications (or no classification) and the compute or network resources used to run the single-class models. In some embodiments, the threshold may be dynamically determined after multi-class artificial intelligence model circuit 212 produces its output by performing a clustering analysis on the elements of the output. For example, agglomerative hierarchical clustering may be used to determine a threshold.

In some embodiments, classification controller circuit 204 will cause a subset of the single-class models (e.g., model 310 - 314) of single-class artificial intelligence model circuit 210 to execute, dependent on decision 320. Each model that is run may produce a single output related to the possibility that packet flow is related to that class. For example, each single-class model 310 -314 may be an autoencoder. The data packets (e.g., the payload) may be sent through the autoencoder and the output of the autoencoder compared to the original data packets using a fit metric. The fit metric defining how well the autoencoder recreated the original data packets (e.g., median absolute error). After the fit metric has been evaluated in single-class artificial intelligence model circuit 210, classification controller circuit, may use the fit metrics to determine the class (e.g., be choosing the class for which the single-class model had the highest fit metric).

Once a class has been identified system 200 or another system may affect the packet flow based on the class. For example, policies may be applied and or packet flows may be prioritized. Example policies include, but are not limited to:

controlling content access based on the flow type; prioritizing packet flows based on service guarantees or requirements for different classes; managing the bandwidth for any single class; or routing traffic based on the packet class.

The classification architecture shown in FIG. 3 is advantageous for the classification of packet flows within a communication network because multi-class artificial intelligence model circuit 212 and a subset of first feature generation circuit 206 may be implemented in the network hardware, whereas single-class artificial intelligence model circuit 210 may be implemented on a node computer in the cloud or other server. In such cases, single-class artificial intelligence model circuit 210 may only need to run when multi-class artificial intelligence model circuit 212 cannot make an accurate classification, thus reducing the need to send the generated features to the server or cloud computer. Furthermore, multi-class artificial intelligence model circuit 212 may be difficult to update as it requires updating the network hardware; however the packet flows that are difficult to identify will be sent to single-class artificial intelligence model circuit 210 which can be periodically updated with new models based on the latest packet flows as the features of different types of packets may slowly change over time as applications change, networked video games change, or different streaming services become more popular.

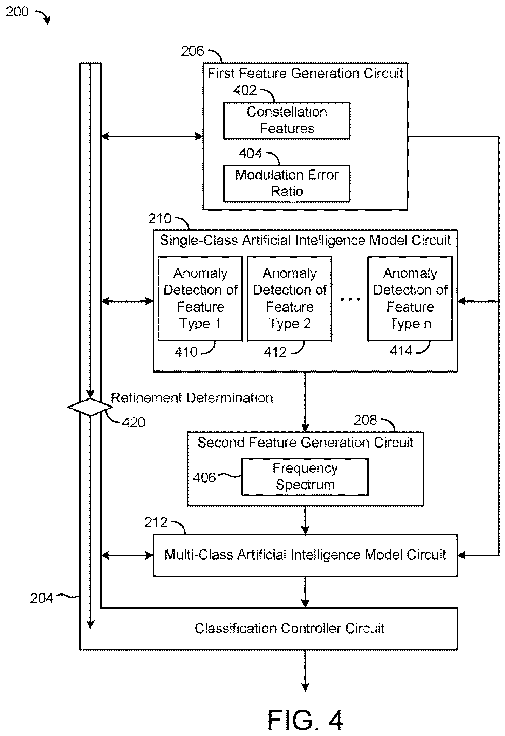

FIG. 4 shows a configuration of system 200 that can be used to classify different types of channel impairments, according to some embodiments. Types of channel impairments that may be detected include, but are not limited to interference from nearby frequency channels; increased noise; attenuation in signal strength at specific frequencies; distortion from resonant peaking; roll off; interference from a standing wave or non-uniform wave; flat loss across a wide range of frequencies; or a tilted attenuation that gradually increases as frequency changes.

According to some embodiments, system 200 includes first feature generation circuit 206. First feature generation circuit 206 may be configured to generate features for the first set of AI models to be evaluated. In some embodiments, first feature generation circuit 206 may generate features related to the constellation diagram (e.g., using constellation features module 402) and features related to the received modulation error ratio (MER). Constellation features may be any feature related to the geometry of detected signals on the complex plane (IQ plane) showing the phase angle and magnitude of a signal. Examples of constellation features include, but are not limited to: dispersion, shift, clustering within a segment, rotations, tilt, and attenuation. The modulation error ratio is defined as the ratio between the RMS power of the signal for the reference (ideal) vector on a constellation diagram and the RMS power of a vector representation of the error between the ideal vector and the received vector.

In some embodiments, classification controller circuit 204 may be configured to cause the features calculated by first feature generation circuit 206 to be evaluated by the models (e.g., models 410 - 414) of single-class artificial intelligence model circuit 210. Each single-class model may be configured to detect if a feature or class of features is indicative of an anomaly. For example, one single-class model may process the MER and determine if recent MERs are indicative of a fault; another single-class model may process other constellation features (e.g., rotation and tilt) and determine if those features are indicative of a fault. In some embodiments, single-class artificial intelligence model circuit 210 may be configured to use any number of single-class AI models (e.g., one for each feature).

In some embodiments, classification controller circuit 204 is configured to perform a determination as to whether or not further classification is required (e.g., as indicated by decision 420). Decision 420 may be configured to cause classification controller circuit 204 to run a second (e.g., multi-class artificial intelligence model circuit 212) if any of the outputs of single-class artificial intelligence model circuit 210 are indicative of an anomaly (e.g., channel impairment). For example, decision 420 may compare each output to a threshold. In some embodiments, the threshold is the same for each of the outputs. In some embodiments, the threshold may be dependent on the specific set of features the AI model is evaluating. In some embodiments, the threshold may be calculated dynamically depending on any number of calculations, including the features or the output of the model. Advantageously, the operation(s) of second feature generation circuit 208 and multi-class artificial intelligence model circuit 212 may only be run at times when a single-class AI model indicates an anomaly; thus potentially saving both computations and communications traffic in a limited resource environment.

In some embodiments, classification controller circuit 204 is configured to cause second feature generation circuit 208 to run if an anomaly is detected. Second feature generation circuit 208 may generate the frequency spectrum (e.g., with frequency spectrum module 406). After second feature generation circuit 208 generates the required features, multi-class artificial intelligence model circuit 212 may be executed. In some embodiments, multi-class artificial intelligence model circuit 212 may be configured to use inputs from both the first and second feature generation modules. For example, multi-class artificial intelligence model circuit 212 may be configured to use the frequency spectrum as well as the constellation features and the modulation error. In some embodiments, multi-class artificial intelligence model circuit 212 may be configured to use only the features from the second feature generation circuit (e.g., the frequency spectrum). Multi-class artificial intelligence model circuit 212 may be configured to produce a vector output where each element of the vector is a value relating to the possibility that the anomaly relates specific class (e.g., a specific feature impairment). For example, the first element may relate to adjacency, the second element may relate to resonant peaking, etc.

In some embodiments, classification controller circuit 204 is configured to choose the class of anomaly based on the output of multi-class artificial intelligence model circuit 212 (e.g., by choosing the largest number). In some embodiments, classification controller circuit 204 is configured to perform a mitigating action based on the class of impairment detected. For example, if a tilt is detected in the frequency spectrum an equalizing filter can be employed to mitigate its affects; if resonant peaking is detected an adaptive filter could be applied to eliminate the resonant peaks; any appropriate mitigating action may be taken based on the classification of the channel impairment.

The classification architecture shown in FIG. 4 is advantageous for the classification of communication channel impairment because single-class artificial intelligence model circuit 210 and first feature generation circuit 206 may be implemented in the network hardware, whereas second feature generation circuit 208 and multi-class artificial intelligence model circuit 212 may be implemented on a node computer in the cloud or other server. In such cases, second feature generation circuit 208 multi-class artificial intelligence model circuit 212 may only need to run when an anomaly is detected by the edge device, thus reducing the need to send the generated features to the server or cloud computer. Furthermore, single-class artificial intelligence model circuit 210 may be difficult to update as it requires updating the network hardware; however the more complex multi-class artificial intelligence model circuit 212 can be periodically updated with new models.

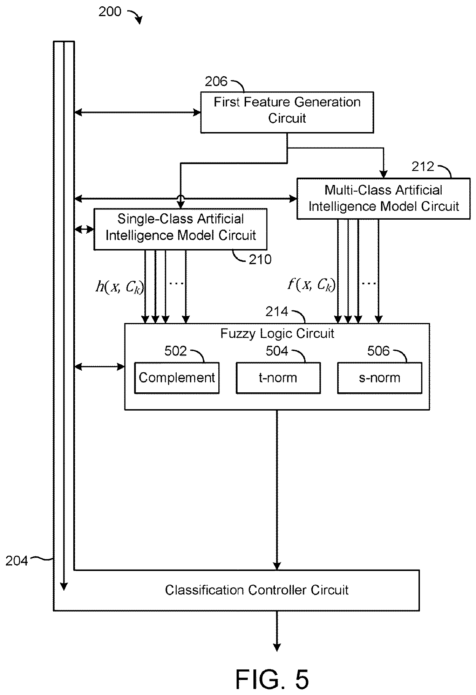

Referring to the general architecture of FIG. 5, classification controller circuit is configured to combine the results of single-class artificial intelligence model circuit 210 and multi-class artificial intelligence model circuit 212 to make a classification decision. In some embodiments, classification controller circuit 204 combines the results using fuzzy set operations. For example, the output of each of a single-class AI model (where the output is valued between zero and one) may be considered a membership function of input $x$ in a fuzzy set of class $C_k$, represented by $h(x, C_k)$; and each element of the output of a multi-class model may be considered a second membership function for a fuzzy set of class $C_k$, represented by $f(x, C_k)$. In some embodiments, additional fuzzy set membership functions may be included in the classifier; the additional fuzzy set membership functions may be parameterized and have a form different than an AI or ML model. In some embodiments, fuzzy logic circuit 214 may be configured to combine the results of each of the single-class AI models first. Combining the single-class AI models may be done by first calculating the membership function for $x$ in a fuzzy set representing "not class $C_i$" for all class indices $i$ that are not equal to $k$. This can be performed by taking the complement (e.g., with complement module 502) of each membership function $i \neq k$ and taking the t-norm of all of these complements. In some embodiments, the complement is calculated by subtracting the membership function from 1 and the t-norm is calculated using the min function; thus, the membership function for $x$ in a fuzzy set representing "not class $C_i$" for all class indices $i$ that are not equal to $k$ is given by:

$$\bigcap_{i \neq k} h(x, \bar{C}_i) = \min_{i \neq k}[1 - h(x, C_i)]$$

where the overbar is used to represent the complement set. The single-class outputs can be further combined to find the membership function for $x$ in a fuzzy set representing class $C_k$ and "not class $C_{i\_}$" for all class indices $i$ that are not equal to $k$ is given by:

$$h(x, C_k) \cap \left[\bigcap_{i \neq k} h(x, \bar{C}_i)\right] = \min\left(h(x, C_k), \min_{i \neq k}[1 - h(x, C_i)]\right)$$

Similar operations can be performed using the elements of the multi-class AI model to calculate the membership function for $x$ in a fuzzy set representing class $C_k$ and "not class $C_i$" for all class indices $i$ that are not equal to $k$ is given by: To combine the membership function from the multi-class networks and the membership function from the single-class networks, fuzzy logic circuit 214 may be configured to calculate the s-norm (e.g., with s-norm module 506) to find the membership in either of the above previously defined fuzzy sets:

$$F(x, C_k) = \{h(x, C_k) \cap [\bigcap_{i \neq k} h(x, \bar{C}_i)]\} \cup \{f(x, C_k) \cap [\bigcap_{i \neq k} f(x, \bar{C}_i)]\} =$$

$$\max\left\{\min\left(h(x, C_k), \min_{i \neq k}[1 - h(x, C_i)]\right), \min\left(f(x, C_k), \min_{i \neq k}[1 - f(x, C_i)]\right)\right\}$$

In some embodiments, classification controller circuit 204 may be configured to determine the class based on the evaluation of the fuzzy set membership function $F(x, C_k)$ (e.g., by choosing the largest value across each class index $k$. In some embodiments, more than one multi-class AI model may be evaluated and similar calculations can be performed on all multi-class AI models, combining the final result with a s-norm (e.g., max) of all multi-class AI models and the single-class AI models.

Some embodiments of system 200 are configured for selectively running various models based on the output of another model. This decreases that amount of computation that is required to perform the described classification and allows for hardware (e.g., a router) to perform its main task of propagating information through a communications network more efficiently in some embodiments. In some embodiments, the decrease in computation requirements provides for a smaller or cheaper hardware device. In some embodiments, combining the outputs of several classifiers using fuzzy logic allows for a classification decision to be provided without the need for training or executing an additional artificial intelligence model thereby reducing the amount of training data that needs to be collected and decreasing the time or the complexity of the circuitry required to perform the classification. In some embodiments, models may be distributed between an edge device and the cloud; selectively running the models in the cloud additionally reduces the network traffic generated for performing the classification and allows the bandwidth to be used for the data that is being propagated through the network rather than on traffic generated to perform the classification. In some embodiments, the complex models or those used to refine results are evaluated in the cloud and can be updated without the expense of updating each hardware device, providing for improved classification even as the characteristics of communications systems change over time.

**Model Training with Fuzzy Logic**

In some embodiments, training of the multi-class and single class artificial intelligence models is done simultaneously with the fuzzy logic operations in place. Advantageously, this allows the classification metric used to train the system to use the classification error that would be realized when the system is deployed; rather than training the models separately and not considering how the fuzzy logic operations will affect the final result in some embodiments.

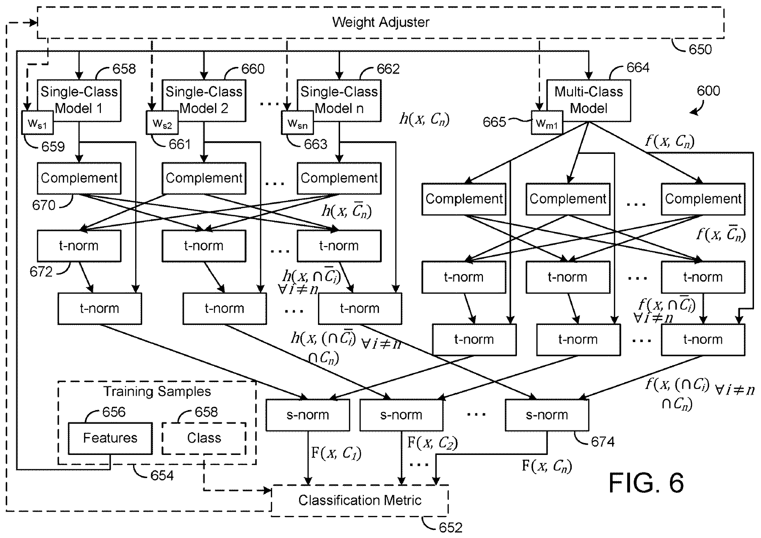

FIG. 6 shows diagram 600 illustrating the training process of an AI model with the fuzzy logic operations in place, according to some embodiments. Training a network may include passing training samples through the forward path of the network in the same manner they would be on a deployed model, comparing the results with the true class, and adjusting the weights (e.g., parameters) that define the network. Referring to FIG. 6 the forward path of the network as described by the equations above is shown in solid lines, whereas the feedback for modifying the weights to improve classification accuracy is shown in dashed lines. In some embodiments, training is done in a separate system from system 200. For example, training may be done on a desktop computer, cloud computer system, or a specialized computer with processors specifically designed to train artificial intelligence systems (e.g., graphical processing unit (GPU)). In some embodiments, training may be performed within the same hardware as system 200 or, if system 200 is distributed across several discrete hardware components, training may be performed on any such hardware component.

In some embodiments, the forward path of the network in diagram 600 includes a number of single-class AI models (e.g., models 658, 660, and 662) each parameterized using a set of weights (e.g., weights 659, 661, and 663). Flow diagram 600 may also include a number of multi-class AI models (e.g., model 664) also parameterized by a set of weights (e.g., weights 665). Each of the AI models may be configured to produce outputs representing the grade of membership of a fuzzy set related to a number of classes that the system is trying to identify (e.g., $h(x, C_k)$ or $f(x, C_k)$). In some embodiments, additional fuzzy set membership functions may be included in the classifier; the additional fuzzy set membership functions may be parameterized and have a form different than an AI or ML model. In some embodiments, the additional fuzzy set membership functions are trained with the single-class and multi-class AI models. In some embodiments, the forward path includes executing various fuzzy logic operations (e.g., 670 - 674) in order to perform the calculations described by the previously discussed equations. The output of these fuzzy logic operations may be the membership grade or truth value that the input belongs to the class with index $k$ given both the multi-class and single-class models $F(x, C_k)$.

In some embodiments, supervised training is performed. Each training sample of training samples 654 has features 656 that are used to propagate the forward path of the AI network in 600 and a known class 658. During training, a number of training samples are propagated through the forward path and the results are compared to the true class to perform a calculation in classification metric module 652. The classification metric may be any mathematically defined objective function that training seeks to minimize by adjusting the weights, for example, a fit function to be maximized or a loss function to be minimized (e.g., cross-entropy loss). Weight adjuster 650 may be configured to, after the number of training samples are propagated through the forward path, update the weights by an amount in a direction to decrease (if a loss function is used or increase if a fit function is used) the classification metric. This process may be repeated a number of times or until a criterion is satisfied and the training is stopped. In some embodiments, each iteration may use a different subset of the training samples. For example, each iteration may use a number of randomly sampled training samples with replacement; each iteration may use a number of randomly sampled training samples without replacement until all samples have been used; or choosing the samples for each iteration may be systematic rather than random.

As noted previously, including the fuzzy logic operations in the training procedure may advantageously improve classification compared to training the models alone and then combining the results only in the deployed version of the network. The classification metric may include terms in addition to the overall classification loss. For example, the single-class AI models and the multi-class AI models may have to perform well both independently and when combined with fuzzy logic operations as described in some embodiments of system 200. In such examples, it may be desired to include both individual classification performance at the output of each AI model and combined classification performance after the fuzzy logic operations in a single classification metric.

As noted previously, it may be advantageous to deploy one set of models on the edge (e.g., in network hardware) and one set of models in the cloud to decrease network traffic and computations in a resource restricted environment. In some embodiments, the set of models deployed to the cloud or some other centralized location may be updated more frequently. The training method described by diagram 600 may still be used in such scenarios. Consider an example where the multi-class AI model can be updated easily, and the single-class AI models cannot. In such an example, the training process can be performed with the single-class models in place; their weights fixed at their currently deployed weights; and only the weights of the multi-class AI model may be updated by weight adjuster 650. This has the advantage of updating the multi-class model in a manner that makes best use of the existing single-class models. In an example where the single-class models can be easily updated and the multi-class model cannot, the single-class models would be trained with the multi-class model fixed.

**Classification Methods**

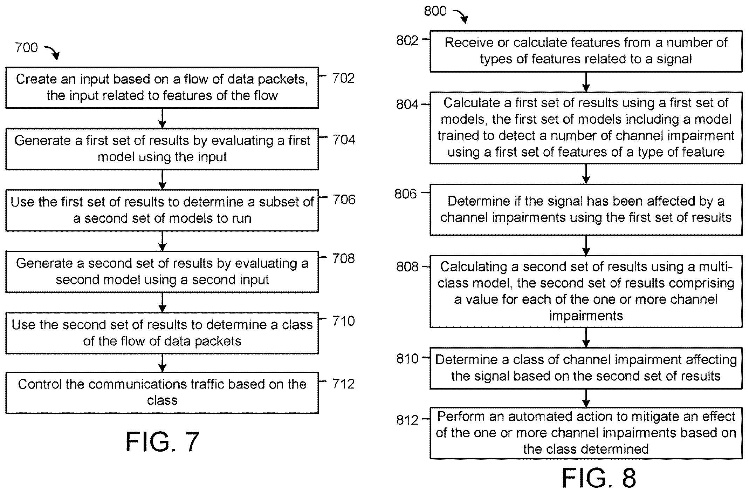

FIG. 7 shows a flow diagram of flow of operations 700, a method for classifying data packet flows, according to some embodiments. In some embodiments, flow 700 includes creating an input based on a flow of data packets in step 702. In some embodiments, generating the input related to features of the flow includes detecting the initiation of a packet flow (e.g., by analyzing a source and destination IP address and determining how much time has passed since the last time a packet with the same source and destination was received). In some embodiments, generating the input related to features of the flow includes packet grouping by taking a sampling of packets from a packet flow to determine the features (e.g., statistics) based on that sampling. Example features include, but are not limited to: the port, the transmission control protocol (TCP) flag, the payload, routing information, the packet size distribution, jitter, the interarrival time, packet loss rate, throughput, or any other value or statistic of the flow of data packets, its payload, or its metadata.

In some embodiments, flow 700 includes step 704 to generate a first set of results by evaluating a first model using the input created in step 702. The first model may be a multi-class artificial intelligence model configured to produce a first set of results including a vector for which each element is a value related to the possibility that the packet flow is of one of the possible classes (e.g., gaming, video streaming, data transfer, etc.). For example, the elements may be numbers between zero and one. In some embodiments, the first set of results are aggregated with the features so both can be used future steps of flow 700. The artificial intelligence models used may include convolutional neural networks, transformer models, pre-trained generative transformer models, autoencoders, long-short term memory networks, recursive neural networks, support vector machines, nearest neighbor classifiers, or any other suitable artificial intelligence model.

In some embodiments, flow 700 includes a model selection in step 706 to determine a subset of a second set of models to run based on the first set of results. Advantageously, running a subset of the single-class models reduce both computational and communication resources used by flow 700 in some embodiments. In some embodiments, single-class models are included in the subset if the element of the results of the multi-class artificial intelligence model related to that class is above a threshold. Or single-class models may be included if more than one of the elements of the result has a similar value (e.g., in the case where multi-class artificial intelligence model circuit 212 is uncertain of the class). The threshold may be defined during the training process by performing a trade-off analysis between the number of misclassifications (or no classification) and the compute or network resources used to run the single-class models. In some embodiments, the threshold may be dynamically determined after multi-class artificial intelligence model circuit calculates its results by performing a clustering analysis on the elements of the output. For example, agglomerative hierarchical clustering may be used to determine a threshold.

In some embodiments, flow 700 includes step 708 to generate a second set of results by evaluating a second model using the inputs. Each model that is run may produce a single output related to the possibility that packet flow is related to that class. For example, each single-class model may be an autoencoder. The data packets (e.g., the payload) may be sent through the autoencoder and the output of the autoencoder compared to the original data packets using a fit metric. In some embodiments, flow 700 includes using the second set of results to determine a class of the flow in step 710. For example, the fit metric may define how well the autoencoder recreated the original data packets (e.g., using median absolute error) and the model with the highest fit metric may be the determined class.

According to some embodiments, flow 700 includes step 712 to control the communications traffic based on the class. For example, an automated action may be performed to affect the packet flow based on the class. For example, policies may be applied and/or packet flows may be prioritized. Example policies include, but are not limited to: controlling content access based on the flow type; prioritizing packet flows based on service guarantees or requirements for different classes; managing the bandwidth for any single class; or routing traffic based on the packet class.

FIG. 8 shows a flow diagram of flow of operations 800, a method for classifying communication channel impairments, according to some embodiments. Types of channel impairments that may be detected include, but are not limited to: interference from nearby frequency channels; increased noise; attenuation in signal strength at specific frequencies; distortion from resonant peaking; roll off; interference from a standing wave or non-uniform wave; flat loss across a wide range of frequencies; or a tilted attenuation that gradually increases as frequency changes.

According to some embodiments, flow 800 includes receiving or calculating features from a number of types of features. In some embodiments, features related to the constellation diagram and features related to the received modulation error ratio (MER) may be received or calculated. Constellation features may be any feature related to the geometry of detected signals on the complex plane (IQ plane) showing the phase angle and magnitude of a signal. Examples of constellation features include, but are not limited to: dispersion, shift, clustering within a segment, rotations, tilt, and attenuation. The modulation error ratio is defined as the ratio between the RMS power of the signal for the reference (ideal) vector on a constellation diagram and the RMS power of a vector representation of the error between the ideal vector and the received vector. The frequency spectrum (e.g., the information related to the power of a signal at different frequencies) may also be received or calculated. Not all the features are required to be used by all models. For example, each of the single-class models may use one type of feature and each multi-class model may use a different feature type.

In some embodiments, flow 800 includes step 804 to calculate a first set of results using a first set of models, the first set of models including a model trained to detect a number of channel impairments using a first set of features of a type of feature. Each single-class model may be configured to produce a result related to a determination that a feature or class of features is indicative of an anomaly. For example, one single-class model may process the MER and determine if recent MERs are indicative of a fault; another single-class model may process other constellation features (e.g., rotation and tilt) and determine if those features are indicative of a fault. In some embodiments, number of models (e.g., one for each feature) may be used.

In some embodiments, flow 800 includes step 806 to determine if the signal has been affected by a channel impairment using the first set of results. In some embodiments, step 806 is performed to determine if further classification is required. For example, step 806 may include comparing each output to a threshold. In some embodiments, the threshold is the same for each of the outputs. In some embodiments, the threshold may be dependent on the specific set of features the AI model is evaluating. In some embodiments, the threshold may be calculated dynamically dependent on any number of calculations, including the features or the output of the model. Advantageously, subsequent steps of flow 800 may only be run at times when a first set of models indicates an anomaly; thus potentially saving both computations and communication traffic in a limited resource environment.

In some embodiments, flow 800 includes calculating a second set of results using a multi-class model in step 808. The second set of results may include a value for each of the one or more channel impairments. The multi-class model used in step 808 may not use the same feature inputs as any of the single-class models of step 804. For example, multi-class model may use the frequency spectrum as an input to calculate the second set of results. In some embodiments, the multi-class artificial intelligence model may use features used by the single-class model and additional features. For example, the multi-class artificial intelligence model may be configured to use the frequency spectrum as well as the constellation features and the modulation error. The output of multi-class artificial intelligence model may produce a vector output where each element of the vector is a value relating to the possibility that the anomaly relates specific class (e.g., a specific feature impairment). For example, the first element may relate to adjacency, the second element may relate to resonant peaking, etc.

In some embodiments, flow 800 includes determining a class of the channel impairment affecting the signal based on the second set of results in step 810. For example, the class for which the respective output is the largest may be chosen. In some embodiments, flow 800 includes performing an automated action to mitigate an effect of the channel impairment based on the class in step 812. For example, if a tilt is detected in the frequency spectrum an equalizing filter can be employed to mitigate its affects; if resonant peaking is detected an adaptive filter could be applied to eliminate the resonant peaks; any appropriate mitigating action may be taken based on the classification of the channel impairment.

Flow 800 provides advantages for the classification of communication channel impairment over typical classification schemes because step 808 may only need to run when an anomaly is detected. If flow 800 is distributed across multiple compute devices this may reduce the network traffic.

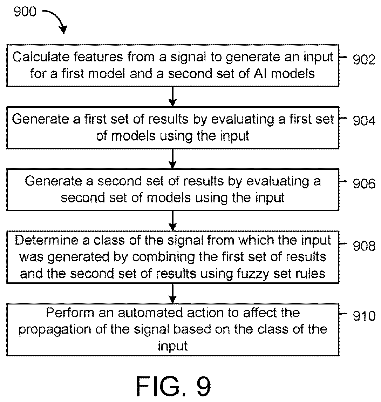

FIG. 9 shows flow of operations 900 a method for affecting the propagation of a signal based on a classification result, according to some embodiments. In some embodiments, flow 900 includes calculating features from a signal to generate an input to a first and a second set of artificial intelligence models in step 902. Affecting the propagation of a signal may include affecting the time it takes before it is relayed by network hardware (e.g., by prioritizing the relay of information) or affecting how the signal is interpreted after demodulation by a communications device (e.g., by filtering frequency bands or performing equalization). The input may include any features related to the signal (e.g., MER, etc.) or any features related to the information it is carrying (e.g., packet statistics)

In some embodiments, flow 900 includes generating a first set of results by evaluating a first set of models using the input and generating a second set of results using a second set of models using the input in steps 904 and 906. In some embodiments, flow 900 includes step 908 to determine the class of the signal from which the input was generated by combining the first and the second set of results using fuzzy logic operations. For example, a fuzzy truth value or a membership grade for the combined multi-class and single-class models may be calculated using the equation:

$$F(x, C_k) = \{h(x, C_k) \cap [\cap_{i \neq k} h(x, \bar{C}_i)]\} \cup \{f(x, C_k) \cap [\cap_{i \neq k} f(x, \bar{C}_i)]\} =$$

$$\max\left\{\min\left(h(x, C_k), \min_{i \neq k}[1 - h(x, C_i)]\right), \min\left(f(x, C_k), \min_{i \neq k}[1 - f(x, C_i)]\right)\right\}$$

as described previously; and the class may be determined by choosing the class of index k for which $F(x, C_k)$ is the greatest. According to some embodiments, flow 900 includes affecting the propagation of the signal (e.g., how it is interpreted after demodulation or how long it takes to be processed) in step 910.

**Configuration of Exemplary Embodiments**

As utilized herein, the terms "approximately," "about," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The construction and arrangement of the systems and methods as shown in the various exemplary embodiments are illustrative only. Although only a few embodiments have been described in detail in this disclosure, many modifications are possible (e.g., variations in port or destination quantity, data types, methods of reinsertion, reintroduction, etc., values of parameters, arrangements, etc.). For example, the position of elements may be reversed or otherwise varied, the connections between elements may be direct or indirect, such that there may be one or more intermediate elements connected in between, and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions, and arrangement of the exemplary embodiments without departing from the scope of the present disclosure. For example, the embodiments of the present disclosure may be implemented by a single device and/or system or implemented by a combination of separate devices and/or systems.

The term "or," as used herein, is used in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is understood to convey that an element may be either X, Y, Z; X and Y; X and Z; Y and Z; or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

References herein to the positions of elements (i.e., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule-based logic and other logic to accomplish the various connection steps, processing steps, comparison steps, and decision steps.

The present disclosure contemplates methods, systems, and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer (i.e., ASICs or FPGAs) or any other machine with a processor. Combinations of the above are also included within the scope of machine-readable media. Machine-executable instructions include, for example, instructions and data which cause a general purpose computer, special purpose computer, or special purpose processing machines to perform a certain function or group of functions.

## Claims

1. A system for controlling traffic within a communications network, the system comprising:
   one or more circuits configured to perform operations comprising:

   providing a first input based on a flow of data packets, the input comprising a first set of features of the flow of data packets;
   providing a first set of results by evaluating a first model using the input, an element of the first set of results representing a possibility that the flow of data packets used to create the input is a member of a class of network traffic of a plurality of classes of network traffic;
   using the first set of results to determine a subset of a second set of models to evaluate;
   providing a second set of results by evaluating the subset using a second input, the second input comprising a second set of features of the flow of data packets;
   using the second set of results to determine a first class of the flow of the plurality of classes of network traffic; and
   controlling the traffic based on the first class.

2. The system according to claim 1, wherein the subset of the second set of models to evaluate is determined by comparing the first set of results to a threshold, in particular wherein the threshold is dynamically updated based on the first set of results.

3. The system according to claim 1 or claim 2, wherein creating the first input or the second input based on the flow of data packets comprises:

   detecting an initiation of the flow of data packets;
   collecting an initial set of packets; and
   creating the first set of features or the second set of features based on packet control information and statistics of the data packets.

4. The system according to one of claims 1 to 3, wherein generating the first set of results is performed on an edge device of the communications network and/or wherein generating the second set of results is performed on a node in a cluster of computers.

5. The system according to one of claims 1 to 4, wherein the first model comprises a plurality of dichotomizers, each dichotomizer of the plurality of dichotomizers trained to determine if the flow is part a class of the plurality of classes or not part of the class.

6. They system according to one of claims 1 to 5, wherein the second set of models comprises an autoencoder for each class of the plurality of classes.

7. The system according to claim 6, wherein using the second set of results to determine the first class comprises selecting the autoencoder that best fits the input or the flow of data packets according to a fit metric, in particular wherein the fit metric comprises at least one of a median absolute deviation, mean absolute error, or a mean squared error.

8. The system according to one of claims 1 to 7, wherein the first set of results and the second set of results are combined using fuzzy set operations, in particular wherein the first model and the second set of models are trained together using the fuzzy set operations to calculate a classification metric during training.

9. A system for detecting and responding to a channel impairment within a communications network, the system comprising:
   one or more circuits configured to perform operations comprising:

receiving or calculating features from a plurality of types of features related to a signal;

calculating a first set of results using a first set of models, the first set of models comprising a model trained to detect one or more channel impairments using a first set of features of a type of feature of the plurality of types of features;

determining if the signal has been affected by the one or more channel impairments using the first set of results;

calculating a second set of results using a second model, the second set of results comprising a value for each of the one or more channel impairments;

determining a class of channel impairment affecting the signal based on the second set of results; and

performing an automated action to mitigate an effect of the channel impairment based on the class determined.

10. The system according to claim 9, wherein the plurality of types of features comprises at least one of:

features related to a constellation diagram of the signal;
features related to a received modulation error ratio of the signal; or
features related to a frequency spectrum of the signal.

11. The system according to claim 9 or claim 10, wherein the second model comprises a plurality of models, each of the plurality of models used in calculating one or more of the values for each of a plurality of classes.

12. The system according to one of claims 9 to 11, wherein determining if the signal has been affected by the channel impairment is performed on an edge device of the communications network, wherein using the second model to determine the class of channel impairment affecting the signal is performed on a node in a cluster of computers.

13. The system according to one of claims 9 to 12, wherein the first set of results and the second set of results are combined using fuzzy set operations, in particular wherein the first set of models and the second model are trained together using the fuzzy set operations to calculate a fit metric during training.

14. A method for affecting propagation of a signal, the method comprising:

receiving or calculating features from the signal to generate an input for a first model and a second model;
providing a first set of results by evaluating the first model using the input;
providing a second set of results by evaluating the second model using the input;
determining a class of the input by combining the first set of results and the second set of results using fuzzy set operations; and
performing an automated action to affect the propagation of the signal based on the class of the input.

15. The method according to claim 14, wherein the signals represent audio, video, an image, or combinations thereof, and wherein performing the automated action to affect the propagation of the signal comprises at least one of:

prioritizing processing the signal or related signals based on the class of the input; or
mitigating a channel impairment based on the class of the input.

FIG. 1

200

204

| Classification Controller Circuit |

206
First Feature
Generation Circuit

210 ⌐220
Single-Class Artificial
Intelligence Model Circuit

214
Fuzzy Logic Circuit

208
Second Feature
Generation Circuit

212
Multi-Class Artificial
Intelligence Model Circuit

# FIG. 2

200

206

First Feature Generation Circuit

302

Flow Initiation Detection Module

304

Packet Grouping

306

Data Conversion

212

Multi-Class Artificial Intelligence Model Circuit

Model Selection

320

210

| Class 1 Model | Class 2 Model | . . . | Class n Model |

310

312

314

Single-Class Artificial Intelligence Model Circuit

204

Classification Controller Circuit

FIG. 3

200

206

First Feature Generation Circuit

402

Constellation
Features

404

Modulation Error
Ratio

210

Single-Class Artificial Intelligence Model Circuit

| Anomaly Detection of Feature Type 1 | Anomaly Detection of Feature Type 2 | ... | Anomaly Detection of Feature Type n |

410    412    414

Refinement Determination

420

208

Second Feature Generation Circuit

406    Frequency
Spectrum

212

Multi-Class Artificial Intelligence Model Circuit

204

Classification Controller Circuit

# FIG. 4

FIG. 5

FIG. 6

700 ↘

Create an input based on a flow of data packets, the input related to features of the flow — 702

↓

Generate a first set of results by evaluating a first model using the input — 704

↓

Use the first set of results to determine a subset of a second set of models to run — 706

↓

Generate a second set of results by evaluating a second model using a second input — 708

↓

Use the second set of results to determine a class of the flow of data packets — 710

↓

Control the communications traffic based on the class — 712

## FIG. 7

800 ↘

802 — Receive or calculate features from a number of types of features related to a signal

↓

804 — Calculate a first set of results using a first set of models, the first set of models including a model trained to detect a number of channel impairment using a first set of features of a type of feature

↓

806 — Determine if the signal has been affected by a channel impairments using the first set of results

↓

808 — Calculating a second set of results using a multi-class model, the second set of results comprising a value for each of the one or more channel impairments

↓

810 — Determine a class of channel impairment affecting the signal based on the second set of results

↓

812 — Perform an automated action to mitigate an effect of the one or more channel impairments based on the class determined

## FIG. 8

900 ⌐↘

| Calculate features from a signal to generate an input for a first model and a second set of AI models | ⊢ 902 |

| Generate a first set of results by evaluating a first set of models using the input | ⊢ 904 |

| Generate a second set of results by evaluating a second set of models using the input | ⊢ 906 |

| Determine a class of the signal from which the input was generated by combining the first set of results and the second set of results using fuzzy set rules | ⊢ 908 |

| Perform an automated action to affect the propagation of the signal based on the class of the input | ⊢ 910 |

## FIG. 9